# EUROPÄISCHE PATENTSCHRIFT

(11) **EP 0 637 707 B1**
(45) Veröffentlichungstag und Bekanntmachung des Hinweises auf die Patenterteilung: **23.10.1996**
(21) Anmeldenummer: 94110691.6
(22) Anmeldetag: 09.07.1994
(51) Int. Cl.: F16K 7/06

(54) **Quetschventil zum Absperren eines Schlauches**
Pinch valve
Robinet à manchon pincé

(30) Priorität: 06.08.1993 DE 4326449
(43) Veröffentlichungstag der Anmeldung: 08.02.1995
(73) Patentinhaber: Verwaltungs Lohse GmbH & Co. KG, D-89522 Heidenheim-Oggenhausen (DE)
(72) Erfinder: Warnke, Klaus, D-89522 Heidenheim (DE)
(74) Vertreter: Weitzel, Wolfgang, Dr.-Ing. Patentanwalt

(56) Entgegenhaltungen:
- DE-B- 1 038 850
- FR-A- 2 231 916
- US-A- 5 297 773

## Beschreibung

Die Erfindung betrifft ein Quetschventil zum Absperren eines Schlauches.

Derartige Ventile sind in großer Zahl und in vielfältiger Ausführung bekanntgeworden.

Ein solches Ventil weist im allgemeinen ein Gehäuse auf, das den Schlauch oben schließt, ferner zwei Bügel, die im wesentlichen parallel zueinander angeordnet sind, und die zum Zwecke des Zusammenquetschens bzw. Wiederfreigebens des Schlauches zusammengefahren bzw. wieder auseinandergefahren werden können. Weiterhin ist bei einem solchen Ventil ein Antrieb vorgesehen sowie ein Übertragungsmechanismus zum Übertragen der Quetschkraft vom Antrieb auf einen der beiden Quetschbügel, oder auf beide Quetschbügel. Der Antrieb kann ein Handrad umfassen, und der Übertragungsmechanismus eine Gewindespindel. Stattdessen kann auch ein pneumatischer oder hydraulischer Antrieb mit Druckzylinder, Kolben und Kolbenstange vorgesehen sein.

Die genannten Quetschbügel müssen beim Öffnen oder Schließen derart geführt werden, daß sie mit ihren dem Schlauch zugewandten Quetschflächen planparallel verlaufen; die Quetschflächen müssen somit bei Betrieb des Quetschventils eine Parallelverschiebung zueinander ausführen. Zu diesem Zwecke müssen die Bügel in Verschieberichtung geführt werden. Hierzu dienen beispielsweise Führungsstangen, die am Gehäuse befestigt sind, und die durch Bohrungen in den Quetschbügeln hindurch geführt sind. Die entsprechenden Führungselemente müssen bearbeitet werden, was einen erheblichen Aufwand darstellt.

Das gleiche gilt dann, wenn das Quetschventil gehäuselos ausgeführt ist. Auch in diesem Falle müssen Führungselemente vorgesehen werden, also beispielsweise Führungsstangen, in denen wiederum die Führungsbügel laufen.

Ein weiterer Nachteil der bekannten Quetschventile besteht darin, daß die beim Schließvorgang vom Antrieb aufzubringende Kraft mit zunehmendem Abquetschen des Schlauches ansteigt. Handelt es sich um einen motorischen Antrieb, so muß dessen Leistung dem maximalen Kraftaufwand angepaßt sein.

FR-A-2231916 beschreibt ein Rohrquetschgerät mit den Merkmalen des Oberbegriffes von Anspruch 1.

Der Erfindung liegt die Aufgabe zugrunde, ein Quetschventil gemäß dem Oberbegriff von Anspruch 1 zu schaffen, das im Aufbau einfacher als die bisher bekannten Quetschventile ist, das insbesondere weniger Teile mit bearbeiteten Flächen aufweist, dessen Antriebsleistung nicht durch die maximale, beim Schließvorgang aufzubringende Kraft bestimmt ist, das bedienungsfreundlich ist, und das leicht demontierbar ist.

Diese Aufgabe wird durch die kennzeichnenden Merkmale von Anspruch 1 gelöst.

Hierdurch wird im einzelnen folgendes erreicht:

Das Gehäuse des Ventils braucht keine Führungsflächen aufzuweisen, die bearbeitet werden müssen. Der Übertragungsmechanismus - nämlich das Scherengitter - kann im geschlossenen Gehäuse angeordnet werden. Somit ist es gegen Verschmutzung geschützt. Im Normalfall besteht kein Anlaß, das Gehäuse aufzumachen, und den Übertragungsmechanismus, nämlich das Scherengitter, zu warten. Ein ganz besonderer Vorteil des Quetschventils gemäß der Erfindung besteht darin, daß die Schließkraft über den gesamten Schließweg im wesentlichen gleich groß ist. Das Übersetzungsverhältnis der Scheren beträgt zu Beginn des Schließvorganges in einem konkreten Falle 1 : 2, und kurz vor dem Schließzustand 2 : 1. Dieses Übersetzungsverhältnis ist genau proportional dem Widerstand von Schlauch und Schlauch-Innendruck.

Die maximale Schließkraft kurz vor dem Schließen erreicht durch das Übersetzungsverhältnis von 2 : 1 nur die Hälfte des Wertes herkömmlicher Armaturen. Deshalb kann auch der Antrieb - Handrad, pneumatischer Antrieb, hydraulischer Antrieb, elektromotorischer Antrieb - klein ausgelegt werden.

Gemäß einem weiteren Gedanken der Erfindung wird dem Schlauch ein ganz bestimmtes Querschnittsprofil gegeben, so daß bei einer bestimmten Anzahl von Schließ- und Öffnungsintervallen die Lebensdauer des Schlauches gesteigert werden kann, wodurch sich der Bedienungskomfort steigern und die Wartungskosten senken lassen.

Die Erfindung ist anhand der Zeichnung näher erläutert. Darin ist im einzelnen folgendes dargestellt:

Fig. 1 zeigt ein Quetschventil in einem zur Schlauchachse senkrechten Querschnitt.

Fig. 2 zeigt ein Quetschventil in einem Querschnitt, das in einer durch die Schlauchachse verlaufenden, zur Schließrichtung parallelen Ebene verläuft.

Fig. 3 zeigt einen erfindungsgemäßen Schlauch in zusammengequetschtem Zustand.

Fig. 4 zeigt den Schlauch gemäß Fig. 3 bei maximalem Durchschlußquerschnitt.

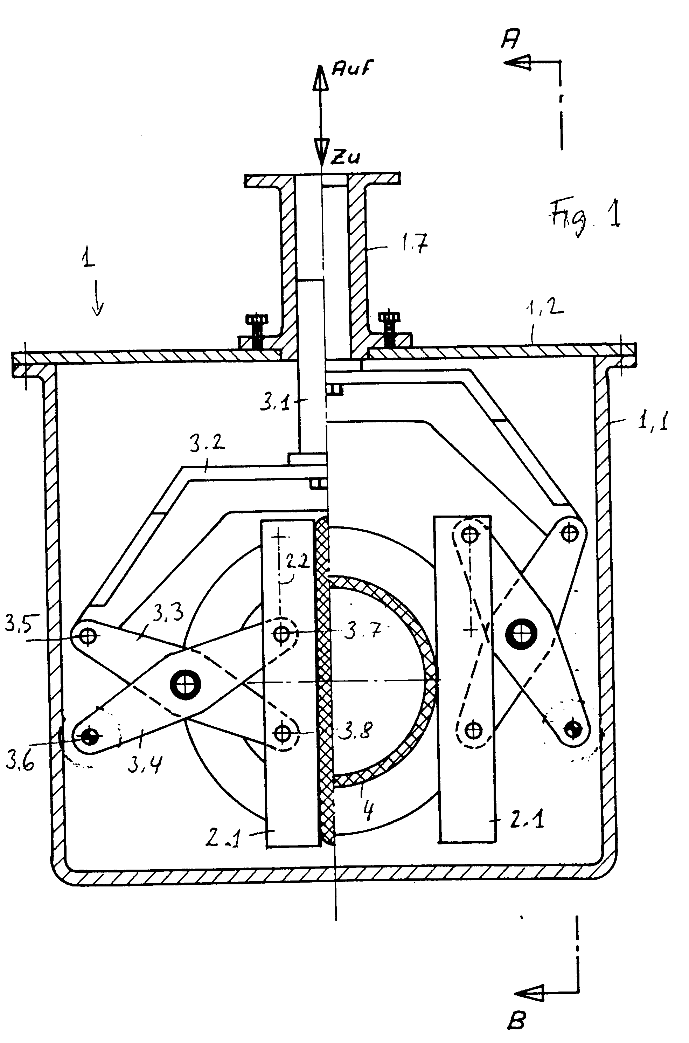

Das in Fig. 1 gezeigte Quetschventil weist ein Gehäuse 1 auf, mit einem Gehäuseunterteil 1.1 und einem Deckel 1.2. In einer symmetrischen Anordnung sind zwei Quetschbügel 2.1, 2.1 vorgesehen. Ferner ist ein Antrieb vorgesehen, der hier nicht dargestellt ist.

Ein Übertragungsmechanismus umfaßt eine Schubstange 3.1, ein an dieser unten befestigtes Joch 3.2, sowie ein Scherengitter, das die Doppelhebel 3.3, 3.4 sowie vier Gelenke 3.5, 3.6, 3.7 und 3.8 umfaßt.

Man erkennt ferner aus Fig. 1 den Schlauch 4 des Quetschventils. Die linke Hälfte dieser Figur zeigt die Schließstellung, während die rechte Hälfte die Stellung des maximalen Durchschlußquerschnittes darstellt.

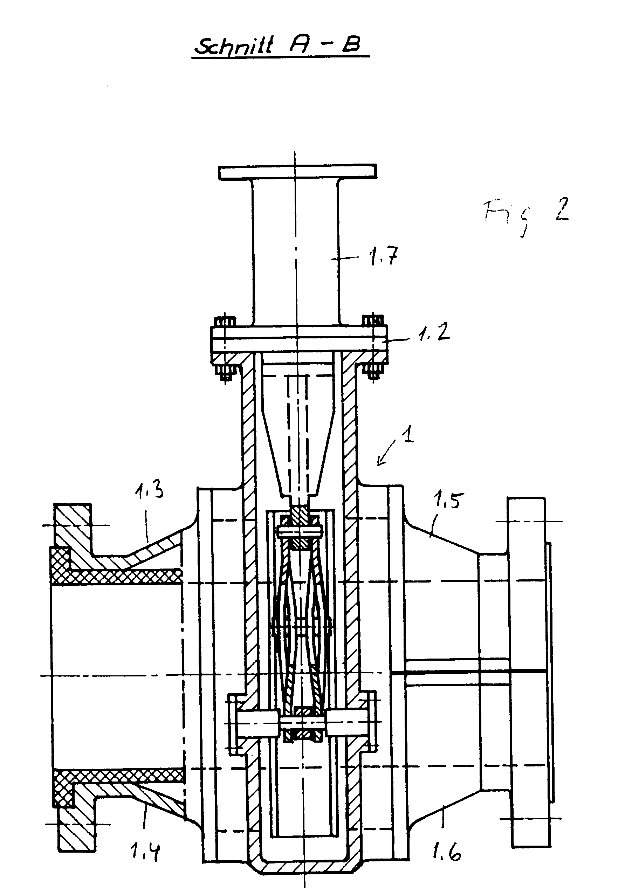

Wie man aus Fig. 2 erkennt, sind am eigentlichen Gehäuse 1 beidseits Rohrstutzen angeschraubt. Diese Rohrstutzen sind in einer Horizontalebene, die durch die Schlauchachse verläuft, jeweils geteilt, so daß insgesamt vier Rohrstutzenhälften 1.3, 1.4, 1.5 und 1.6 vorhanden sind. Auf dem Gehäusedeckel 1.2 ist ein Führungsaufsatz 1.7 aufgeschraubt, der zum Führen der Schubstange 3.1 dient.

Die beiden Scherengitter sind jeweils am äußeren Ende des Doppelhebels 3.4 mittels Gelenk 3.6 am Gehäuse-Unterteil 1.1 angelenkt, und in soweit in Bezug auf das Gehäuse 1 ortsfest. Die beiden unteren, freien Enden des Joches 3.2 greifen mittels Gelenk 3.5 am äußeren Ende des Doppelhebels 3.3 an. Die beiden anderen Enden - die dem Schlauch 4 zugewandten Enden - greifen jeweils an einem der beiden Bügel 2.1 an. Dabei ist Gelenk 3.8 in Bezug auf den Bügel 2.1 ortsfest, jedoch ist Gelenk 3.7, und damit auch das diesbezügliche Ende von Doppelhebel 3.4, in Bezug auf den Bügel 2.1 verschiebbar. Die Verschiebung erfolgt in Längsrichtung der Bügel 2.1. Eine strichpunktierte Linie 2.2 deutet ein Langloch an, in welchem ein Bolzen des Gelenkes 3.7 auf- und ab gleiten kann.

Wie man erkennt, arbeitet das Ventil wie folgt:

Wird mittels des (nicht dargestellten) Antriebes auf das zunächst geöffnete Quetschventil von oben her eine Kraft auf die Schubstange 3.1 ausgeübt, so wird diese Kraft mittels des Joches 3.2 über Gelenk 3.5 auf den Doppelhebel 3.3 übertragen. Die Schere schließt sich, indem das Gelenk 3.5 sowie auch das Gelenk 3.7 nach unten gedrückt wird und gleichzeitig wird der betreffende Bügel 2.1 in Schließrichtung bewegt.

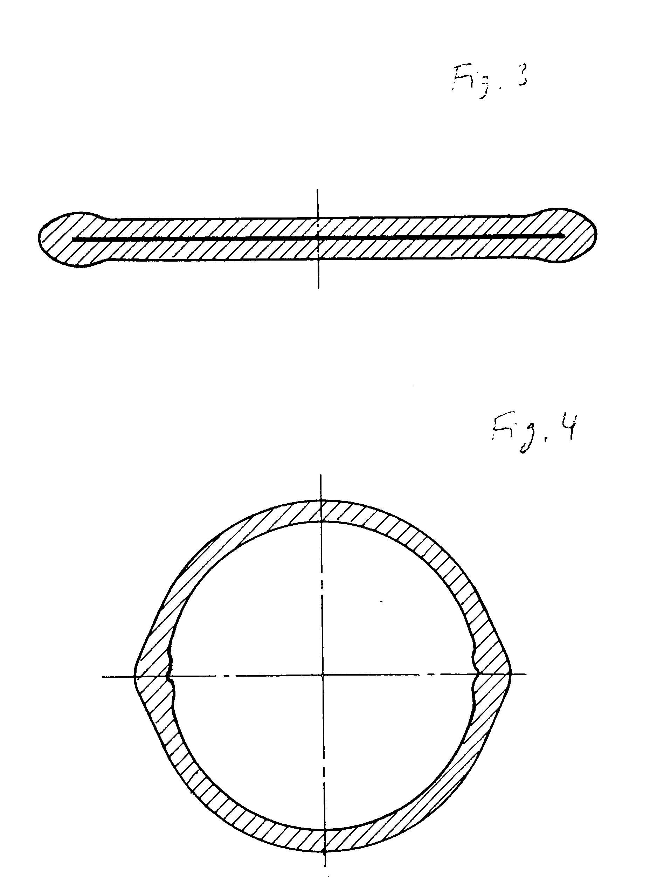

Von besonderem Interesse ist die Gestaltung des Querprofiles des Schlauches 4. Wie man aus Fig. 3 erkennt, weist der Schlauch in zusammengequetschtem Zustand einen Querschnitt auf, der über den größten Teil seiner Länge bis auf die beiden Endbereiche einem langgestrecktem Rechteck gleicht. Die Endbereiche haben annähernd die Form einer Ellipse. Dabei ist die kleine Achse der Ellipse etwas größer, als die Breite des Rechteckes.

Im nicht-gequetschten Zustand gemäß Fig. 4 erkennt man im Bereich der Quetschebene jeweils wulstartige Verdickungen des Schlauches. Man beachte die Außenkontur im Bereich der horizontal verlaufenden Quetschebene. Diese ist dadurch entstanden, daß an dieser Stelle der Kreiskontur eine einzige, kuppenartige Kontur aufgesetzt wurde. Die Innenkontur weicht ebenfalls von der Kreiskontur ab, und zwar dadurch, daß jeweils oberhalb und unterhalb der horizontalen Quetschebene je eine weitere kuppenartige Kontur aufgesetzt wurde.

Von allen möglichen, im Rahmen der Erfindung liegenden Abwandlungen kommt z.B. in Betracht, das Quetschventil asymmetrisch auszubilden. Femer könnte der eine Quetschbügel absolut ortsfest, d.h. nicht beweglich sein, sondern nur der andere in Schließrichtung bewegt werden. Das Scherengitter könnte einen anderen Übersetzungsbereich als den eingangs genannten von 1: 2 bis 2 : 1 aufweisen. Statt zweier Doppelhebel pro Scherengitter könnten mehrere Scherengitter vorgesehen werden. Im Extremfalle bedarf es nicht unbedingt eines Gehäuses. Auch könnte das Gehäuse auf einer Seite, beispielsweise von unten her, völlig offen oder leicht öffenbar sein, beispielsweise für Wartungszwecke.

## Patentansprüche

1. Quetschventil zum Absperren eines Schlauches (4);
1.1 mit einem Bügel und einem Gegenbügel (2.1; 2.1) zum Zusammenquetschen des Schlauches;
1.2 mit einem Antrieb (3.1);
1.3 mit einem zwischen Antrieb (3.1) und Bügel (2.1; 2.1) geschalteten Übertragungsmechanismus (3)
1.4 der Übertragungsmechanismus (3) umfaßt wenigstens ein Scherengitter mit wenigstens zwei Doppelhebeln (3.3, 3.4);
1.5 ein Doppelhebel (3.4) des Scherengitters ist an einem von dem betreffenden Bügel (2.1) fernen Punkt ortsfest angelenkt;
1.6 der Antrieb greift mittelbar oder unmittelbar an einem anderen Doppelhebel (3.3) des Scherengitters an, dadurch gekennzeichnet daß jedem Bügel (2.1;2.1) ein Scherengitter zugeordnet ist.

2. Quetschventil nach Anspruch 1, dadurch gekennzeichnet, daß ein Gehäuse (1) vorgesehen ist, das den Übertragungsmechanismus (3) sowie die Bügel (2.1, 2.1) mit dem zusammenzuquetschenden Schlauchabschnitt umschließt.

3. Quetschventil nach Anspruch 1 oder 2, dadurch gekennzeichnet, daß die Quetschebene in Bewegungsrichtung des Antriebes verläuft.

4. Scherengitter nach einem der Ansprüche 1-3, dadurch gekennzeichnet, daß der Übertragungsmechanismus in Bezug auf die Quetschebene symmetrisch ausgeführt ist.

5. Quetschventil nach einem der Ansprüche 1-4, gekennzeichnet durch die folgenden Merkmale:
5.1 Die einem Bügel (2.1) am nächsten liegenden Doppelhebelenden zweier einander zugeordneter Doppelhebel sind an diesem Bügel (2.1) angelenkt;
5.2 das eine Gelenk (3.8) ist in Bezug auf diesen Bügel (2.1) ortsfest, während das andere Gelenk (3.7) an diesem Bügel (2.1) senkrecht zur Quetschrichtung zu gleiten vermag.

6. Quetschventil, nach einem der Ansprüche 1-5, dadurch gekennzeichnet daß es einen Schlauch aufweist mit der folgenden Querschnittsform:
6.1 der Schlauch weist in zusammengequetschem Zustand die Gestalt eines langgestreckten Rechteckes auf, bis auf seine beiden Endbereiche;
6.2 die beiden Endbereiche haben wenigstens annähernd jeweils die Gestalt einer Ellipse, wobei die kleine Achse der Ellipse wenigstens geringfügig größer als die Breite des Rechteckes ist;
6.3 im Zustand maximalen Durchflußquerschnittes ist die Außenkontur des Schlauches (4) gegenüber der Kreiskontur durch einen einzigen, in Quetschebene liegenden, kuppenartigen Wulst verdickt, und die Innenkontur durch zwei kuppenartige Wulste, die jeweils unmittelbar vor der Quetschebene liegen.

## Claims

1. Pinch valve for closing off a flexible pipe (4);
1.1 with a clamp and a counter-clamp (2.1; 2.1) to press together the flexible pipe;
1.2 with a drive means (3.1);
1.3 with a transmission mechanism (3) connected between the drive means (3.1) and clamps (2.1; 2.1);
1.4 wherein the transmission mechanism (3) comprises at least one slidable lattice grate with at least two double levers (3.3, 3.4);
1.5 a double lever (3.4) of the slidable lattice grate is fixed to pivot at a point remote from the respective clamp (2.1);
1.6 the drive means engages directly or indirectly another double lever (3.3) of the slidable lattice grate,
characterised in that a slidable lattice grate is allocated to each clamp (2.1; 2.1).

2. Pinch valve according to Claim 1, characterised in that a housing (1) is provided which encloses the transmission mechanism (3) as well as the clamps (2.1, 2.1) with the section of pipe to be pressed together.

3. Pinch valve according to Claim 1 or 2, characterised in that the compression plane runs in the direction of movement of the drive means.

4. Slidable lattice grate according to one of Claims 1-3, characterised in that the transmission mechanism is constructed symmetrically in relation to the compression plane.

5. Pinch valve according to one of Claims 1-4,
characterised by the following features:
5.1 the double lever ends lying closest to a clamp (2.1) of two double levers allocated to one another are pivoted on this clamp (2.1);
5.2 one joint (3.8) is fixed in relation to this clamp (2.1), whilst the other joint (3.7) is able to slide on this clamp (2.1) perpendicular to the direction of compression.

6. Pinch valve according to one of Claims 1-5,
characterised in that it has a flexible pipe with the following cross-sectional form:
6.1 when pressed together, the flexible pipe has the form of an elongated rectangle except for its two end regions;
6.2 the two end regions each have at least approximately the form of an ellipse, the small axis of the ellipse being at least slightly larger than the width of the rectangle;
6.3 in the state of maximum flow cross-section, the outer contour of the flexible pipe (4) is thickened in relation to the circular contour by a single dome-like bulge lying in the compression plane, and the inside contour by two dome-like bulges, each lying directly in front of the compression plane.

## Revendications

1. Valve à écrasement permettant d'obturer un tuyau souple (4) comprenant :
1.1 une traverse et une contre-traverse (2.1, 2.1) servant à écraser le tuyau souple sur lui-même,
1.2 un dispositif d'entraînement (3.1),
1.3 un mécanisme de transmission (3) interposé entre le dispositif d'entraînement (3.1) et les traverses (2.1, 2.1),
1.4 le mécanisme de transmission (3) comprenant au moins un croisillon en ciseaux comportant au moins deux doubles leviers (3.3, 3.4),
1.5 un double levier (3.4) du croisillon en ciseaux étant articulé de manière fixe en un point éloigné de la traverse (2.1) correspondante,
1.6 le dispositif d'entraînement attaquant directement ou indirectement un autre double levier (3.3) du croisillon en ciseaux,
caractérisé en ce qu'à chaque traverse (2.1, 2.1), il est associé un croisillon en ciseaux.

2. Valve à écrasement selon la revendication 1, caractérisée en ce qu'il est prévu un boîtier (1) qui enveloppe le mécanisme de transmission (3) et les traverses (2.1, 2.1), avec le tronçon de tuyau souple devant être écrasé sur lui-même.

3. Valve à écrasement selon la revendication 1 ou 2, caractérisée en ce que le plan d'écrasement s'étend suivant la direction de déplacement du dispositif d'entraînement.

4. Valve à écrasement selon l'une des revendications 1-3, caractérisée en ce que le mécanisme de transmission est réalisé d'une manière symétrique vis-à-vis du plan d'écrasement.

5. Valve à écrasement selon l'une des revendications 1-4,
caractérisée par les particularités suivantes :
5.1 les extrémités de deux doubles leviers associés l'un à l'autre qui sont situées au plus près d'une traverse (2.1) sont articulées à cette traverse (2.1),
5.2 une première articulation (3.8) est fixe vis-à-vis de cette traverse (2.1), tandis que l'autre articulation (3.7) peut coulisser sur cette traverse (2.1) perpendiculairement à la direction d'écrasement.

6. Valve à écrasement selon l'une des revendications 1-5, caractérisée en ce qu'elle comprend un tuyau souple présentant la forme suivante en section transversale :
6.1 à l'état écrasé sur lui-même, le tuyau souple a la forme d'un rectangle allongé, à l'exception de ses deux zones d'extrémité,
6.2 les deux zones d'extrémité ont chacune au moins approximativement la forme d'une ellipse, le petit axe de l'ellipse étant au moins légèrement plus grand que la largeur du rectangle,
6.3 à l'état à section transversale maximale de passage, le contour extérieur du tuyau souple (4) est épaissi, vis-à-vis du contour circulaire, au moyen d'un bourrelet unique en forme de calotte situé dans le plan d'écrasement et le contour intérieur 5 est épaissi au moyen de deux bourrelets en forme de calotte qui sont situés chacun directement devant le plan d'écrasement.
